Europäisches Patentamt

European Patent Office

Office européen des brevets

(19)

(11) **EP 1 045 229 A1**

(12) **EUROPEAN PATENT APPLICATION**

(43) Date of publication:
 **18.10.2000 Bulletin 2000/42**

(51) Int Cl.⁷: **G01G 3/16**

(21) Application number: **99302804.2**

(22) Date of filing: **12.04.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Robertson, Paul**<br>**Rosyton, Herts SG8 8QZ (GB)** |
| (71) Applicant: **Arcall plc**<br>**Wareham, Dorset BH20 4SR (GB)** | (74) Representative: **Haley, Stephen**<br>**Gill Jennings & Every,**<br>**Broadgate House,**<br>**7 Eldon Street**<br>**London EC2M 7LH (GB)** |

(54) **Sensor unit**

(57)   A sensor for determining the mass of a substance applied thereto comprises a base and a measuring plate for receiving the substance in use. The measuring plate is movably attached to the base and means for vibrating the measuring plate. Means are provided for determining the resonant vibrating frequency of the moving plate, and therefore means for determining any change in the resonant frequency of the measuring plate and determining therefrom the mass of any substance applied to the measuring plate in use. Alternatively, the sensor may employ changes in its electrical characteristics to determine substance mass. A corresponding method and a unit comprising plural sensors are also disclosed.

Figure 1

## Description

This invention relates to a sensor for detecting quantities of coating substances.

There are many industrial processes in which the surface of an article is coated with a material, typically in the form of a spray liquid, molten material, suspension or powder. One example is in the food industry, where oils, flavourings, release agents etc. are coated on to edible products, or the tins that they are cooked in. Another example is in the automotive industry where protective coatings and paints are applied to components on a production line.

The coating material is often of a relatively high value, and it is advantageous, both for economic and quality control reasons, to be able to distribute the material in a reliable and usually uniform way. Currently, the coating is often measured by passing a pre-weighed sample through the system and weighing it after coating. The mass difference is then determined and related to deposition quantity. Such an approach requires repeated measurements however, if the uniformity of a particular process across the full width of a conveyor is to be determined. This requirement for multiple samples and weighing introduces inaccuracies, is extremely time consuming, and is readily prone to error. According to the present invention there is provided a sensor for determining the mass of a substance applied thereto, the sensor comprising:

a base;
a measuring plate for receiving the substance in use, the measuring plate being movably attached to the base;
means for vibrating the measuring plate;
means for determining the resonant vibrating frequency of the moving plate; and
means for determining any change in the resonant frequency of the measuring plate and determining therefrom the mass of any substance applied to the measuring plate in use.

According to the present invention there is provided a sensor for determining the mass of a substance supplied thereto, the sensor comprising:

a measuring plate for receiving the substance in use, the measuring plate comprising at least two electrodes; and
means for determining changes in the electrical characteristics of the electrodes when the substance is applied thereto, and for calculating the mass of the substance dependent upon the change in electrical characteristics.

The measuring plate may have an absorbent substance receiving surface. Alternatively, it may have a smooth wipe-clean surface. The measuring plate may be detachable from the base.

The vibrating means may be an electromagnetic drive mechanism.

The sensor may be connected to a central processing system via a radio, optic, ultrasonic or other link. There is also provided a sensor unit comprising a plurality of sensors as defined above.

According to the present invention there is also provided a method of determining the amount of substance deposited by an industrial process, the method comprising the steps of:

passing at least one sensor through the industrial process;
determining the mass of a substance deposited on the sensor by the process from an output from the sensor; and
providing the results to a user.

The method may employ a sensor of the type defined above. Preferably, the method employs a sensor unit of the type provided above. The industrial process may be food manufacturing.

One example of the present invention will now be described with reference to the accompanying drawings, in which:

Fig. 1 is a schematic view of a sensor unit and associated system employing an array of sensors according to the present invention.
Fig. 2 is a perspective view of a first example sensor in accordance with the invention;
Fig. 3 is a side view of a second example sensor in accordance with the invention; and
Fig. 4 is a schematic diagram showing components of a sensor unit employing a sensor in accordance with the invention.

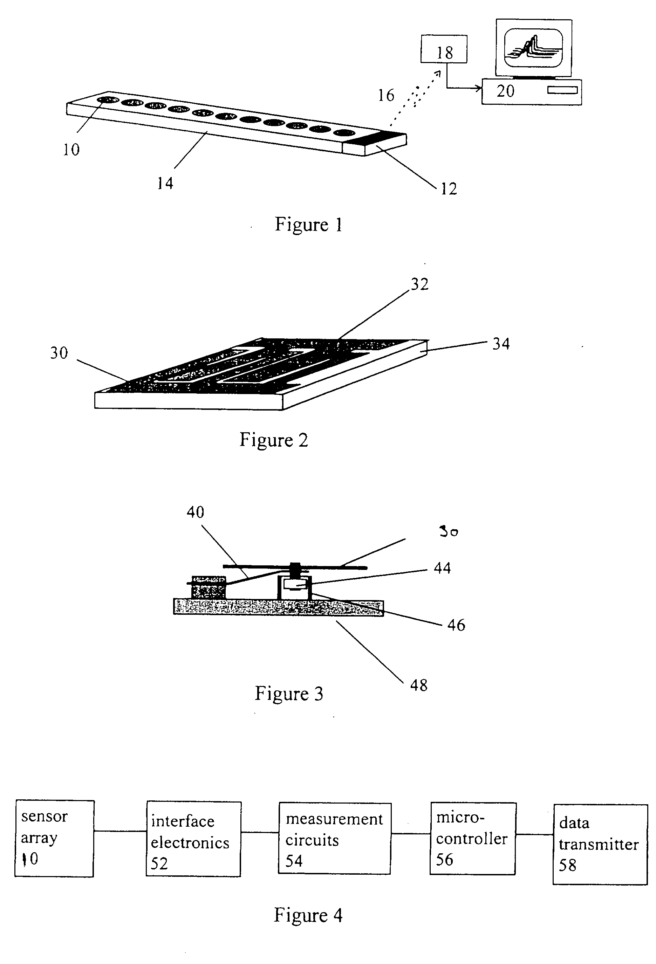

Referring to Fig. 1, a sensor unit 1 in accordance with the invention comprises an array of sensors 10 mounted on a housing 14. The unit 1 has a data transfer unit 12 which transfers data from the sensors via a receiver 18 to a central processing unit 20 that may be an appropriately configured personal computer and display. The data transfer may be via a radio, optical, infra red, ultrasonic or other data transmitting method. The central processor 20 may also be configured to store sensor generated data and process it to provide a readily interpreted end display to a user.

Each of the sensors 10 has a measuring plate 30. The measuring plate 30 has an upper surface 32 onto which a coating substance can be deposited when the sensor unit passed through an industrial process is in use. The upper surface 32 may be configured to be cleaned easily by wiping, washing or capillary action. Alternatively, it may comprise an absorbing layer to prevent liquid from dripping off its surface or dissipating energy during operation of the sensor. The measuring plate 30 may be configured to be readily detachable from a base 48 (see Fig. 3).

In the case of a vibrating sensor the base 48 may have an anti-vibration mounting to reduce chassis vibration and coupling of vibrations into the sensor from external sources and/or other sensors. If the measuring plate 30 is cleanable or easily removable this ensures that the sensor unit can be reused very quickly with minimum maintenance between passes through the process in which the sensor unit is being used.

Figure 2 shows a first example sensor 10 according to the present invention. The upper surface 32 of the sensor 10 has an electrode structure 33 formed thereon. In this example, the electrode structure 33 is a pair of interdigitated electrodes. The capacitance between the electrodes is a function of the electrode geometry, the relative permittivity of the substrate material, and the relative permittivity of any material in close proximity to the electrodes. When there is no substance on the upper surface 32 there is a base value capacitance, which will increase as substance is deposited onto the surface 32.

In use, the sensor 10 of figure 2 can have its change in capacitance monitored as it passes through a process being measured. For a substance of known permittivity and density, the thickness of any layer deposited can be determined from the capacitance change, and from the thickness, the mass of the substance deposited can be derived.

The sensor 10 of figure 2 may be arranged so that the electrode structure 33 is directly exposed to the deposited material. In this case, if an electrically conductive substance is deposited thereon the electrical conductance between the electrodes will change, and from this conductance change, the mass of substance can be measured.

It will be appreciated that the actual capacitance and conductivity changes that can be measured are very much dependent upon sensor geometry.

As an example, however, if the electrode structure 33 is a pair of parallel wires of diameter D with axes separated by a distance S, then the capacitance per metre, is given by

$$C = \Pi \in_0 \in_r / \cosh^{-1}(s/d)$$

Therefore, for a grid of 0.2mm wires, spaced 1mm apart, on a substrate of dielectric constant 2, with dimensions of 50mm by 50mm, a capacitance of about 50pF is provided, with the capacitance increasing from between 10 to 50% as a film of oil is deposited onto the sensor 10.

The changing capacitance can be monitored in one of a number of known ways. An example circuit for measuring capacitance would be one which connected the capacitance to form a self-resonating circuit with an inductor L, giving a resonant frequency of $F=1/2\Pi \surd$ (LC).

Referring to Fig. 3, which shows a second example sensor, it can be seen that the measuring plate 30 in this example is attached to a spring 40 as well as the base 48. In use, the measuring plate 30 is vibrated by application of the appropriate current to a magnet 44 and coil arrangement 46. The coil arrangement 46 may comprise a central drive coil and two outer pickup coils connected in anti-phase to form a single winding, such that the net mutual inductance between the central winding and the pickup winding is minimised. With this arrangement the vibration of the plate 30 causes an alternating voltage to be induced in the pickup winding of the coil arrangement 46. Alternative drive and monitoring arrangements, such as piezo-electric, capacitive and magneto-strictive means may be provided. In operation, interface circuitry 52 is provided in the sensor unit 1 to control the vibration of the measuring plate 30 with appropriate control feedback, with the frequency of vibration of the measuring plate 30 being determined by the natural frequency of spring 40 and the combined mass of the magnet 44, measuring plate 30, and any substance adhering to the plate. In view of this, any change in the resonant frequency can be employed to determine the mass of the substance deposited on the measuring plate 30. In order to explain this it is appropriate to describe some of the fundamental principles underlying the operation.

If we consider a simple mass and spring arrangement, where the mass is free to move in one dimension on the end of a spring which is fixed at its opposite end, the natural frequency or vibration (in simple harmonic motion) is given by:

$$f_o = \surd \, (s/m) \, / \, 2\Pi$$

where:

s is the spring stiffness in N/m, and
m is the mass in Kg.

Hence, if such a system is arranged to vibrate continuously, then by measuring any changes in the resonant frequency, changes in the mass can be inferred. For small changes in the mass, $\delta m$, and assuming constant spring properties, the change in frequency $\delta f$ is given by:

$$\delta f/f_o = \tfrac{1}{2} \cdot \delta m \, / \, m$$

As can be seen, for example, a 2% change in mass will give a 1% change in resonant frequency.

In order to optimise the operation of the sensor unit, the mechanical Q factor of each sensor should be high, typically approximately >100. This ensures a narrow resonance peak, reducing the effect of broad-band vibrations on the sensor 10, and ensures minimum power consumption for the sensor 10.

It will be appreciated that the Q-factor of the sensor can be measured by monitoring the amplitude of the plate vibration, which is related to the amplitude of the voltage induced in the pickup coil part of the coil arrangement 46. If the vibration amplitude drops significantly it is indicative of excessive material on a measuring plate 30 or other malfunction. This feature can be used to test the correct operation of the sensor 10.

Fig. 4 shows the key features of the circuitry employed to control and process the output of either example sensor 10. Measurement circuitry 54, converts sensor signals, such as frequency and amplitude into digital signals for input into a microcontroller 56. It may be that other data, such as ambient temperature, date and time, are also provided. In particular, temperature data is useful in compensating for any sensor response to temperature changes, thereby increasing accuracy. The microcontroller 56 processes the measurement to provide an output indicative of mass of substance deposited on the measuring plate 30, and any data related to system malfunction. This can be provided to a data transmitter 58 for transmission to external circuitry 20. It will be appreciated that features such as the measurement circuits 54, and vital control of 56, could be transferred to the data processing circuitry 20, rather than being within the sensor unit 1.

**Claims**

1. A sensor for determining the mass of a substance applied thereto, the sensor comprising:

    a base;
    a measuring plate for receiving the substance in use, the measuring plate being movably attached to the base;
    means for vibrating the measuring plate;
    means for determining the resonant vibrating frequency of the moving plate; and
    means for determining any change in the resonant frequency of the measuring plate and determining therefrom the mass of any substance applied to the measuring plate in use.

2. A sensor according to claim 1, wherein the vibrating means is a piezo-electric drive mechanism.

3. A sensor according to claim 1, wherein the vibrating means is an electromagnetic drive mechanism.

4. A sensor according to claim 1, 2 or 3 wherein the vibrating means vibrates the measuring plate in the range 1 Hz to 10 kHz.

5. A sensor for determining the mass of a substance supplied thereto, the sensor comprising:

    a measuring plate for receiving the substance in use, the measuring plate comprising at least two electrodes; and
    means for determining changes in the electrical characteristics of the electrodes when the substance is applied thereto, and for calculating the mass of the substance dependent upon the change in electrical characteristics.

6. A sensor according to claim 4, wherein the electrical characteristic is impedance.

7. A sensor according to any of claims 1 to 6, wherein the measuring plate has an absorbent substance receiving surface.

8. A sensor according to any of claims 1 to 6, wherein the measuring plate has a smooth wipe-clean surface.

9. A sensor according to any preceding claim, wherein the measuring plate is detachable from the base.

10. A sensor according to any preceding claim, wherein the sensor is connected to a central processing system via a wireless data transmitter.

11. A sensor unit comprising a plurality of sensors according to any of the preceding claims.

12. A method of determining the amount of substance deposited by an industrial process, the method comprising the steps of:

    passing at least one sensor through the industrial process;
    determining the mass of a substance deposited on the sensor by the process from an output from the sensor; and
    providing the results to a user.

13. A method according to claim 12 employing a sensor according to any of claims 1 to 6.

14. The method according to claim 12 employing a sensor unit according to claim 11.

15. A method according to any of claims 12 to 14, wherein the industrial process is food manufacture.

Figure 1

Figure 2

Figure 3

| sensor array 10 | interface electronics 52 | measurement circuits 54 | micro-controller 56 | data transmitter 58 |
|---|---|---|---|---|

Figure 4

European Patent
Office

**EUROPEAN SEARCH REPORT**

Application Number

EP 99 30 2804

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| Y | US 3 492 858 A (HEFLINGER LEE O ET AL) 3 February 1970 (1970-02-03) * column 2, line 66 - column 3, line 3; claim 1 * | 1-6,12 | G01G3/16 |
| Y | US 5 684 276 A (ALTEMIR DAVID A) 4 November 1997 (1997-11-04) * abstract * * column 5, line 4 - line 13; figure 1 * | 1-6,12 | |
| A | GB 2 292 226 A (GRACE W R & CO) 14 February 1996 (1996-02-14) * abstract * * page 8, line 22 - page 9, line 30 * | 1,5,12 | |
| A | US 5 744 902 A (VIG JOHN R) 28 April 1998 (1998-04-28) * abstract * * column 1, line 66 - column 2, line 39 * | 1,5,12 | |
| | | | **TECHNICAL FIELDS SEARCHED** |
| | | | G01G |

The present search report has been drawn up for all claims

| Place of search | Date of completion of the search | Examiner |
|---|---|---|
| THE HAGUE | 3 September 1999 | Ganci, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 1 045 229 A1**

**ANNEX TO THE EUROPEAN SEARCH REPORT
ON EUROPEAN PATENT APPLICATION NO.**

EP 99 30 2804

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-1999

| Patent document cited in search report | | Publication date | Patent family member(s) | | Publication date |
|---|---|---|---|---|---|
| US 3492858 | A | 03-02-1970 | NONE | | |
| US 5684276 | A | 04-11-1997 | NONE | | |
| GB 2292226 | A | 14-02-1996 | US | 5646338 A | 08-07-1997 |
| | | | AT | 171271 T | 15-10-1998 |
| | | | AU | 690715 B | 30-04-1998 |
| | | | AU | 2897495 A | 04-03-1996 |
| | | | BR | 9508485 A | 30-12-1997 |
| | | | CA | 2195330 A | 15-02-1996 |
| | | | CN | 1158162 A | 27-08-1997 |
| | | | DE | 69504856 D | 22-10-1998 |
| | | | DE | 69504856 T | 18-03-1999 |
| | | | EP | 0774108 A | 21-05-1997 |
| | | | ES | 2121403 T | 16-11-1998 |
| | | | FI | 970413 A | 31-01-1997 |
| | | | WO | 9604529 A | 15-02-1996 |
| | | | NO | 970403 A | 01-04-1997 |
| | | | NZ | 289206 A | 26-01-1998 |
| | | | ZA | 9506311 A | 14-03-1996 |
| US 5744902 | A | 28-04-1998 | NONE | | |

EPO FORM P0459

For more details about this annex : see Official Journal of the European Patent Office, No. 12/82

7